# EUROPEAN PATENT SPECIFICATION

(11) **EP 1 803 110 B1**
(45) Date of publication and mention of the grant of the patent: **05.12.2018**
(21) Application number: 05808511.9
(22) Date of filing: 10.10.2005
(51) Int. Cl.: G09F 3/02

(54) **TISSUE CONTAINER, AND METHOD FOR ARRANGING DATA ON SUCH A TISSUE CONTAINER**
GEWEBEBEHÄLTER SOWIE VERFAHREN ZUM VERSEHEN EINES SOLCHEN GEWEBEBEHÄLTERS MIT DATEN
RECIPIENT POUR TISSUS ET PROCEDE POUR DISPOSER DES DONNEES SUR CE RECIPIENT

(30) Priority: 11.10.2004 NL 1027217
(43) Date of publication of application: 04.07.2007
(73) Proprietor: Synovation B.V., 6921 GX Duiven (NL)
(72) Inventor: KUSTERS, Ronald, Johannes, Wilhelmus, NL-1311 JM Almere (NL)
(74) Representative: Brouwer, Hendrik Rogier
(86) International application number: PCT/NL2005/050012
(87) International publication number: WO 2006/041297

(56) References cited:
- EP-A- 0 487 792
- EP-A2- 0 550 032
- WO-A-03/058285
- GB-A- 2 289 040
- US-A- 5 855 969
- US-B1- 6 518 542

## Description

The invention relates to a container for containing tissue, comprising at least one receiving space for tissue and at least one information surface for arranging data. The invention further comprises a method for arranging information on such a container.

Containers for containing tissue are frequently used to store, order and treat tissue material. Tissue is here understood to mean organic material, isolated from for instance humans, animals or plants. This tissue can for instance be intended for histological or pathological research. Because large quantities of tissue samples are generally examined and analysed in laboratories, it is necessary to be able to trace tissues back to the different sources from which they originate. For this purpose the containers in which the tissue is situated are provided with data from which the origin of the tissue can be traced. This can for instance be a number linked to labels in a log book, a database, or a registration number of a patient. These numbers can for instance be arranged manually by means of a pen. For the sake of legibility it is however recommended to arrange the data using a printer, preferably coupled to an automated database in which the data are stored.

A drawback of arranging data on containers both manually and using a printer is that the arranging is relatively time-consuming, particularly in the case of larger quantities of containers.

In addition to this, both printers and pens or felt-tip pens regularly provide a reduced performance, for instance due to an empty ink reservoir or blocked printer head, whereby the data arranged on the container are difficult to read.

Another drawback of the known methods is that data written or printed with a printer can be erased, for instance due to wear. As a result, the origin of the tissue in the container can no longer be traced. This danger is even greater when the data arranged on the container are exposed to aggressive agents. This is for instance the case when the tissue is pre-treated for microscopic examination. In this sample pre-treatment both the tissue and the container are exposed to diverse chemicals in order to for instance fix and colour the cells in the tissue, whereafter the tissue can be cut into slices for use under a microscope. The container herein comes into contact with organic solvents such as for instance formaldehyde, xylene, acetone, ethyl alcohol, isopropyl alcohol and related substances. Diverse acids and substances such as paraffin and hot wax are also used for specific applications. Under the conditions applied the above stated chemicals can however erase or make illegible the data on the container.

WO 03/058285 discloses an identifier, such as a bar code, comprising machine readable components. At least one of these machine readable components is capable of being modified in response to a stimulus, such as an electric current, temperature change, etc., thus allowing a user/machine to identify whether a certain event has occurred.

US 6,518,542 B1 discloses a method for arranging data on a pathological cassette made of a polymer, such as polyoxymethylene acetal (Delrin®) by using a laser. In the disclosed method, a thin patch is applied onto the cassette material, the patch having a different colour than the cassette material. The patch is then ablatively removed in selected areas by using an electromagnetic radiation. The marking is visible because the patch differs in color from the cassette substrate, and selective ablation reveals the underlying substrate color.

EP 0 550 032 A2 discloses a laser markable polymer composition, comprising a polyacetal, an inorganic photoactive white pigment and a further additive.

US 5,855,969 discloses a method for marking metal or tags for a metal, the method comprising forming on the object a surface coating of a specific silicone resin, comprising a white pigment, and curing the resin sufficiently for marking it by blackening by a CO₂ laser beam.

US 5,840,791 discloses laser marking of electrical/electronic components, key caps, casings and identity cards.

The present invention has for its object to provide a solution for the undesired erasing of data on containers for tissue. The invention also has for its object to make it possible to arrange data more rapidly on such containers.

The invention provides for this purpose a container for containing tissue in accordance with claim 1. The container comprises at least one receiving space for tissue and at least one information surface for arranging data, wherein at least the information surface is manufactured from a material configured to be coloured by electromagnetic radiation, and the information surface is provided with data arranged by selective colouring of the material, colourable by electromagnetic radiation. The material configured to be coloured by electromagnetic radiation is formed substantially from a plastic material, wherein the plastic material comprises a radiation-absorbing pigment.

By making focussed use of electromagnetic radiation to arrange data on the information surface, the data are arranged non-erasably in the material which can be coloured by radiation. The colouring results from chemical transformation under the influence of the electromagnetic radiation, wherein the electromagnetic radiation can for instance be infrared radiation (radiant heat), light, ultraviolet radiation or any other useable electromagnetic radiation. Suitable materials are commercially available. The radiation is preferably concentrated on a small surface area so that the information can be arranged in a high resolution, and a high information density can thus be achieved.

The material is suitable for colouring using laser radiation. Since laser radiation can project very concentrated electromagnetic radiation onto a small surface area, such a material makes it possible to arrange data on the container with a high resolution and thus achieve a high information density. Apart from the choice of material for the information surface, the form of the container can be based on any known usual form of tissue container. These generally take a re-closable form such that in the closed situation a piece of tissue cannot be removed from the receiving space. The receiving space of the claimed container for tissue is further provided with recesses through which liquids and gases from outside the container can easily come into contact with tissue positioned in the receiving space, wherein the liquids or gases can also leave the receiving space easily. The recesses are arranged in the form of a grating. Access of liquids and gases is particularly important in sample pre-treatment of a piece of tissue, wherein the marked container is immersed in diverse liquid chemicals, for instance in order to fix the cells of a piece of tissue for microscopic examination. The use of a tissue container according to the invention prevents data arranged on the marked container being erased during the treatment. It will be apparent that to be able to withstand such treatments the tissue container must be manufactured from a suitable chemically-resistant material

According to the invention, the material configured to be coloured by electromagnetic radiation is formed substantially from a plastic material. Plastic material can be readily embodied in diverse forms and can be obtained with the desired physical and chemical properties. It is advantageous if the whole container is formed substantially from the plastic material. The entire container can thus be manufactured integrally, which makes the container easy to produce by means of known techniques for the processing plastics, such as injection moulding. In a particular preferred embodiment, the plastic material comprises at least one of the following plastics: acetal copolymer, acrylonitrile butadiene styrene, nylon, polyacetal, polycarbonate, polyester, polypropylene, polyurethane, polystyrene, polyphenylene sulphide, polyethylene terephthalate, polybutylene terephthalate and polyoxymethylene. Such plastics are generally available in readily processable variants. Of the stated plastics diverse variants are available with the desired physical and chemical properties for specific processes. In a very advantageous variant the plastic material substantially comprises polyacetal. A container manufactured from the plastic polyacetal is widely applicable and generally accepted as a safe-to-use material, particularly in the field of histology and pathology. Other names for polyacetal are POM or polyoxymethylene, wherein the polymer substantially comprises (-CH₂O-) as repeating monomer. The two best-known forms of polyacetal are the homopolymer, in which formaldehyde bonds substantially form the chains of the polymer, and the copolymer, in which trioxane, the trimer of formaldehyde, and other monomers are connected. Polyacetal in particular has a good chemical resistance compared to a wide range of common chemicals. This results in an improved durability of data for a wide range of applications arranged on the container by selective colouring of the plastic with electromagnetic radiation. In addition, objects manufactured from polyacetal have good mechanical properties.

According to the invention, the material configured to be coloured by electromagnetic radiation comprises a radiation-absorbing pigment. The radiation-absorbing pigment makes it possible to absorb the electromagnetic radiation efficiently, which results in an accelerated colouring of the material configured to be coloured by electromagnetic radiation. The radiation-absorbing pigment can for instance be applied to the surface of the information surface. The radiation-absorbing pigment is preferably mixed with the material configured to be coloured by the electromagnetic radiation. A more homogeneous colouring is thus achieved, whereby data arranged on the information surface are more readily visible. It is recommended that the radiation-absorbing pigment comprises at least one of the following components: mica, pearl pigment, kaolin, aluminium metal, aluminium silicate, antimony trioxide, iron oxide, tin oxide, titanium oxide and aluminium hydroxide. The stated pigments are tried and tested pigments which enable an efficient colouring.

The material configured to be coloured by radiation may be formed by a laminate comprising at least two layers having mutually contrasting colours. A greater colour variation in the presentation of the data on the container is thus made possible. The two contrasting colours of the layers of the laminate can be chosen freely, wherein the upper layer may be selectively removed by electromagnetic radiation and thus reveals the underlying layer in the colour contrasting with the upper layer.

It is advantageous if the information surface can be coupled releasably to the container. Arranging the data on the information surface can thus take place independently of the rest of the container so that a more flexible manner of working is possible. For a releasably coupling connection of the information surface to the container it is possible to envisage diverse systems, such as snap systems or slide systems, with which rapid and simple coupling and uncoupling can be envisaged. The coupling is preferably provided with a locking. Uncoupling is hereby made more difficult, so that the risk of undesired uncoupling of the information surface from the container is minimized. The locking can for instance comprise a barb-like snap element.

In a particular preferred embodiment the container is provided with a reference. It thus becomes possible for instance to determine the position of the information surface of the container in an automated system using detecting means for the reference, the information surface being placed at a known position relative to the reference. The reference can be physical or visual, for instance a physical recess or an optically recognizable symbol.

The invention provides a container in which the information surface is provided with data arranged by selective colouring of the material configured to be coloured by radiation. Such coloured or burnt-in information is more durable and better resistant to physical and chemical wear than for instance the known printed data.

The container can be manufactured by a device for arranging information on a container for tissue according to the invention. A suitable device comprises marking means for arranging data on an information surface of the container, and positioning means for relative positioning of the information surface and the marking means, wherein the marking means comprise an electromagnetic radiation source. The use of an electromagnetic radiation source to arrange data on a tissue container according to the invention makes it possible to carry out the marking more rapidly than is possible using known techniques such as a matrix printer. The electromagnetic radiation source is preferably a laser. A high resolution can be achieved with a laser, so that a relatively large amount of data can be arranged on a relatively small information surface. Depending on the material configured to be coloured by electromagnetic radiation that is used, diverse common lasers can be chosen, such as a YAG-laser or a CO₂-laser.

The positioning means may comprise detection means for determining the position of the information surface of the container. The chance of errors in the arranging of data is hereby minimized. The detection means can take both an optical and mechanical form. In order to determine the position of the information surface, this position can for instance be related to a detected position of a peripheral side of the container. The detecting means are preferably adapted for recognition of the reference of the container, wherein the reference can for instance be a protruding element or a border round the information surface.

It is advantageous if the marking means are connected to a database with data. Data, for instance patient numbers, can thus be arranged rapidly and efficiently on a series of containers.

The invention also provides a method for arranging data on a container for tissue according to the invention, comprising the following processing steps of: positioning an information surface of the container and an electromagnetic radiation source relative to each other, and arranging data on the information surface by selective colouring of at least a part of the information surface by means of electromagnetic radiation. Such a method makes it possible to arrange the data on the container in rapid manner. The data are moreover better resistant to erasure by chemical and mechanical influences.

It is recommended that a laser is used as electromagnetic radiation source. A laser makes it possible to achieve a high information density of data on the container. A laser is furthermore able to arrange the data very rapidly.

In a particular preferred embodiment the data are arranged using a device comprising marking means for arranging data on an information surface of the container, and positioning means for relative positioning of the information surface and the marking means, whereby the marking means comprise an electromagnetic radiation source.
The method can be carried out more efficiently by using such a device. The radiation source can for instance here be controlled from a database with data, enabling operation to be carried out more rapidly and more reliably.

The invention will now be further elucidated on the basis of several non-limitative embodiments.

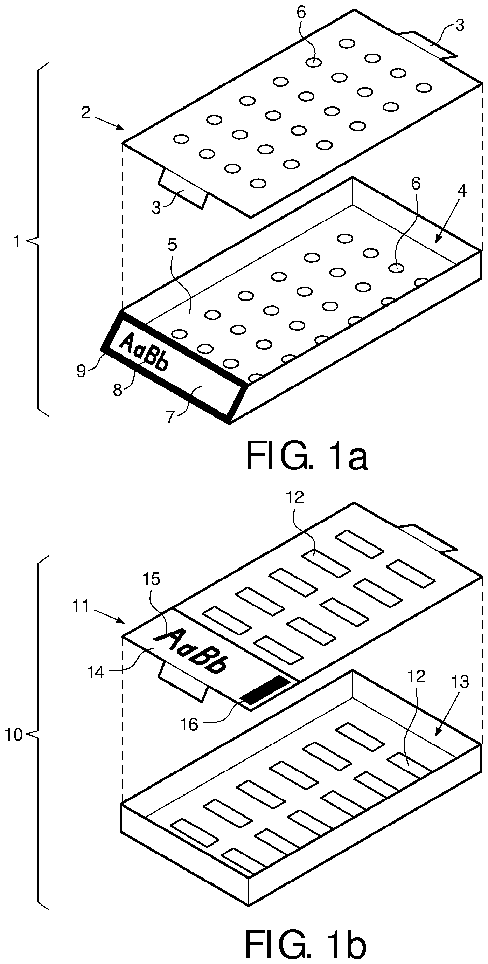

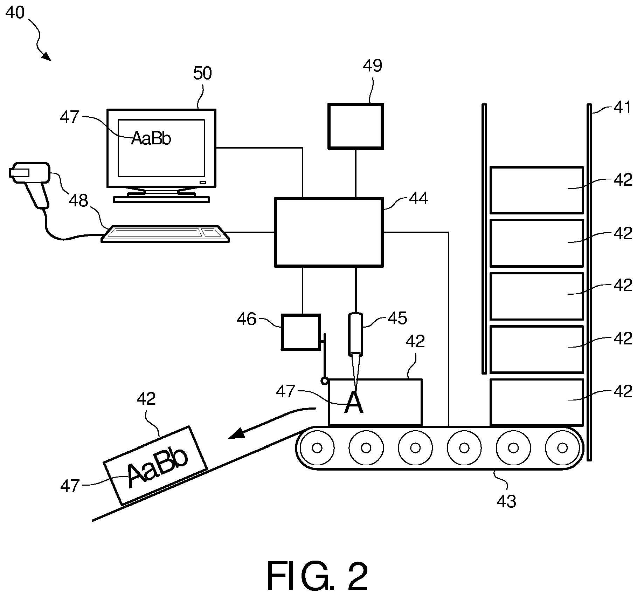

Figures 1a-c show diverse containers for tissue according to the invention. Figure 2 shows a schematic view of a device for arranging information on containers according to the invention.

Figure 1a shows a container 1 for tissue according to the invention. Tissue container 1 is provided with a releasable closing element 2 provided with clamping members 3, with which closing element 2 can be snapped fixedly onto a receiving space 4 of container 1 as according to the dotted lines in order to close the container such that tissue (not shown) placed in receiving space 4 is held inside receiving space 4. Such a container 1 can otherwise also be used without closing element 2. Both closing element 2 and base 5 of receiving space 4 are provided with recesses 6, whereby media, in particular liquids and gases, have free access to tissue placed in receiving space 4. Tissue in receiving space 4 can hereby be treated for diverse purposes. In histology and pathology the tissue is for instance treated with diverse liquid chemicals as part of the sample preparation whereby tissue is for instance made suitable for microscopic examination. Since a plurality of tissue samples is usually treated simultaneously during sample preparation, it is important to be able to distinguish the tissue containers. For this purpose tissue container 1 is provided with an information surface 7 on which are arranged data 8 relating to the tissue placed in container 1. In addition to for instance numbers and letters, these data can also comprise alternative representations of data, such as for instance a bar code. It is generally known to arrange such data 8 using ink, applied using for instance a pen or a printer. A drawback is however that data 8 applied using ink, for instance during the sample preparation, can become difficult to read. The container for tissue 1 shown here does not however have this problem, since the entire container is manufactured from a laser-colourable plastic. Data 8 are burnt into the laser-colourable plastic using electromagnetic radiation of a suitable wavelength. The data 8 arranged in this manner are found to be very difficult to erase. The data are even found able to withstand repeated chemical treatments with diverse solvents such as are applied in histology and pathology. The data 8 can be arranged using an automated marking device provided with a laser. To enable automatic arrangement of data 8, the information surface 7 is provided with a dark-coloured reference border 9 which can be recognized by detection means of the automated marking device, so that the laser applies the data 8 to the part of information surface 7 located inside reference border 9.

Figure 1b) shows a second container for tissue 10, similar to container 1 of figure 1a). This tissue container is also provided with a releasable closing element 11, or cover 11, and recesses 12 for admitting liquid and gaseous media to receiving space 13 of tissue container 10. This container 10 is also manufactured wholly from a plastic which can be coloured by electromagnetic radiation. An information surface 14 is placed on releasable cover 11 for the purpose of arranging data 15. To enable localization of the information surface by optical detection equipment, a reference bar 16 is also arranged on information surface 14. The plastic which can be coloured by electromagnetic radiation from which container 10 is manufactured is mixed with a radiation-absorbing pigment, whereby less radiation is necessary to cause sufficient colouring of the plastic, so that arranging of data 15 can take place more quickly. The coloured data 15 moreover have an improved colour contrast with the parts of information surface 14 not exposed to radiation.

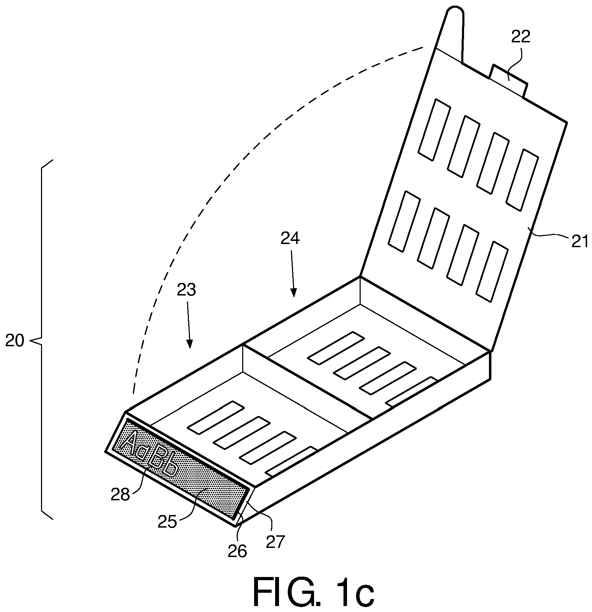

Figure 1c) shows a third container 20 for tissue according to the invention, similar to the tissue containers of figures 1a) and 1b). Closing cover 21 is connected hingedly to the rest of container 20 and is provided with a flexible closing means 22. The container is provided with two separate receiving spaces 23, 24 for tissue, which can both be closed off by the closing cover 21 so that tissue is held inside receiving spaces 23, 24. In contrast to the containers shown in figures 1a and 1b, in this container 20 only the information surface 25 is provided with a material configured to be coloured by electromagnetic radiation. The surface of information surface 25 consists of a laminate of a dark-coloured thin layer 26 which is arranged on the underlying light-coloured plastic 27. For the sake of clarity the dark-coloured layer is here shown relatively too thick. By selectively burning away the dark layer 26 with a laser beam according to a known method, the underlying light-coloured material 27 becomes visible. In this manner data 28 can be arranged on information surface 25. The dark-coloured layer 26 and light-coloured layer 27 can of course be replaced by any other two contrasting colours so as to achieve an effective result. The advantage compared to other materials configured to be coloured by electromagnetic radiation is that a much greater flexibility results for the colours and colour combinations of information surface 25 and the data 28 arranged hereon.

Figure 2 shows a schematic view of a device 40 for arranging information on containers according to the invention. Device 40 comprises a hopper 41 in which a plurality of tissue containers 42 according to the invention is stacked. Using a conveyor 43 the tissue containers 42 are supplied to a marking device 44 which is provided with a laser 45 and a detection member 46 with which the position of a supplied tissue container 42 relative to laser 45 is determined. Laser 44 arranges data 47 in the form of letters, numbers and/or a bar code on tissue container 42. Arranging data using a laser 45 is quicker than a similar process using a plotter or printer, and a higher graphic resolution is also relatively easy to achieve. Marking device 44 is also provided with input means 48, such as a keyboard or a bar code reader, for inputting data 47, a storage medium 49 in which data 47 can be held, for instance in the form of a database, and a display 50 for displaying data 47. Device 40 makes it possible to arrange data 47 on containers according to the invention in relatively rapid manner.

It will be apparent that many variations and applications are still possible within the scope of the invention for a skilled person in the field.

## Claims

1. Container (1, 10) for containing tissue, comprising
- at least one receiving space (4, 13) for tissue, the receiving space (4, 13) comprising a plurality of fluid-access recesses (6, 12) in the form of a grating, through which fluids from outside the container (1, 10) can come into contact with the tissue within the receiving space (4, 13) and leave the receiving space (4, 13), and
- at least one information surface (7, 14) for arranging data (8, 15), **characterised by** that at least the information surface (7, 14) is manufactured from a material configured to be coloured by electromagnetic radiation, wherein the material configured to be coloured by electromagnetic radiation is formed substantially from a plastic material, wherein the plastic material comprises a radiation-absorbing pigment, and wherein the information surface (7, 14) is provided with data (8, 15) arranged by selective colouring of the plastic material by electromagnetic radiation.

2. Container (1, 10) as claimed in claim 1, **characterized in that** the whole container (1, 10) is formed substantially from the plastic material.

3. Container (1, 10) as claimed in claim 1 or 2, wherein the plastic material comprises at least one of the following plastics: acetal copolymer, acrylonitrile butadiene styrene, nylon, polyacetal, polycarbonate, polyester, polypropylene, polyurethane, polystyrene, polyphenylene sulphide, polyethylene terephthalate, polybutylene terephthalate and polyoxymethylene.

4. Container (1, 10) as claimed in claim 1, 2 or 3, wherein the plastic material substantially comprises polyacetal.

5. Container (1, 10) as claimed in claim 1, wherein the radiation-absorbing pigment comprises at least one of the following components: mica, pearl pigment, kaolin, aluminium metal, aluminium silicate, antimony trioxide, iron oxide, tin oxide, titanium oxide and aluminium hydroxide.

6. Container (1, 10) as claimed in any of the foregoing claims, wherein the information surface (7, 14) can be coupled releasably to the container (1, 10).

7. Container (1, 10) as claimed in any of the foregoing claims, wherein the container (1, 10) is provided with a reference (9, 16).

8. Method for arranging data (8, 15) on a container (1, 10) for tissue as claimed in any of the claims 1-7, comprising the following processing steps of:
- positioning an information surface (7, 14) of the container (1, 10) and an electromagnetic radiation source relative to each other, and
- arranging data (8, 15) on the information surface (7, 14) by selective colouring of at least a part of the information surface (7, 14) by means of electromagnetic radiation.

9. Method as claimed in claim 8, wherein a laser is used as electromagnetic radiation source.

10. Method as claimed in either of the claims 8 or 9, wherein the data (8, 15) are arranged using a device comprising
- marking means for arranging data (8, 15) on an information surface (7, 14) of the container (1, 10), and
- positioning means for relative positioning of the information surface (7, 14) and the marking means,
whereby the marking means comprise an electromagnetic radiation source.

## Patentansprüche

1. Behälter (1, 10) zum Aufnehmen von Gewebe, der aufweist:
- wenigstens einen Aufnahmeraum (4, 13) für Gewebe, wobei der Aufnahmeraum (4, 13) eine Vielzahl von Fluidzugangsvertiefungen (6, 12) in der Form eines Gitters aufweist, durch welche Fluide von außerhalb des Behälters (1, 10) in Kontakt mit dem Gewebe innerhalb des Aufnahmeraums (4, 13) kommen und den Aufnahmeraum (4, 13) verlassen können, und
- wenigstens eine Informationsoberfläche (7, 14), zum Anordnen von Daten (8, 15), **dadurch gekennzeichnet, dass**
wenigstens die Informationsoberfläche (7, 14) aus einem Material hergestellt ist, das aufgebaut ist, um durch elektromagnetische Strahlung gefärbt zu werden, wobei das Material, das aufgebaut ist, um durch elektromagnetische Strahlung gefärbt zu werden, im Wesentlichen aus einem Kunststoffmaterial ausgebildet ist, wobei das Kunststoffmaterial strahlungsabsorbierende Pigmente aufweist, und wobei die Informationsoberfläche (7, 14) mit Daten (8, 15) versehen wird, die durch selektives Färben des Kunststoffmaterials durch elektromagnetische Strahlung angeordnet werden.

2. Behälter (1, 10) nach Anspruch 1, **dadurch gekennzeichnet, dass** der gesamte Behälter (1, 10) im Wesentlichen aus dem Kunststoffmaterial ausgebildet ist.

3. Behälter (1, 10) nach Anspruch 1 oder 2, wobei das Kunststoffmaterial, wenigstens einen der folgenden Kunststoffe aufweist: Acetal-Copolymer, Acrylnitril-Butadien-Styren, Nylon, Polyacetal, Polykarbonat, Polyester, Polypropylen, Polyurethan, Polystyren, Polyphenylensulphid, Polyethylenterephthalat, Polybutylenterephthalat und Polyoxymethylen.

4. Behälter (1, 10) nach Anspruch 1, 2 oder 3, wobei das Kunststoffmaterial im Wesentlichen Polyacetal aufweist.

5. Behälter (1, 10) nach Anspruch 1, wobei das strahlungsabsorbierende Pigment wenigstens eine der folgenden Komponenten aufweist: Glimmer, Perlglanzpigment, Kaolin, Aluminiummetall, Aluminiumsilikat, Antimontrioxid, Eisenoxid, Zinnoxid, Titanoxid und Aluminiumhydroxid.

6. Behälter (1, 10) nach einem der vorhergehenden Ansprüche, wobei die Informationsoberfläche (7, 14) lösbar mit dem Behälter (1, 110) verbunden werden kann.

7. Behälter (1, 10) nach einem der vorhergehenden Ansprüche, wobei der Behälter (1, 10) mit einer Referenz (9, 16) versehen ist.

8. Verfahren zum Anordnen von Daten (8, 15) auf einem Behälter (1, 10) für Gewebe nach einem der Ansprüche 1 - 7, das die folgenden Verarbeitungsschritte aufweist:
- Positionieren einer Informationsoberfläche (7, 14) des Behälters (1, 10) und einer elektromagnetischen Strahlungsquelle relativ zueinander; und
- Anordnen von Daten (8, 15) auf der Informationsoberfläche (7, 14) durch selektives Färben wenigstens eines Teils der Informationsoberfläche (7, 14) mittels elektromagnetischer Strahlung.

9. Verfahren nach Anspruch 8, wobei ein Laser als elektromagnetische Strahlungsquelle verwendet wird.

10. Verfahren nach Anspruch 8 oder 9, wobei die Daten (8, 15) unter Verwendung einer Vorrichtung angeordnet werden, die aufweist:
- Markierungseinrichtungen zum Anordnen von Daten (8, 15) auf einer Informationsoberfläche (7, 14) des Behälters (1, 10), und
- Positionierungseinrichtungen für die relative Positionierung der Informationsoberfläche (7, 14) und der Markierungseinrichtungen,
wobei die Markierungseinrichtungen eine elektromagnetische Strahlungsquelle aufweisen.

## Revendications

1. Récipient (1, 10) pour contenir un tissu, comprenant
- au moins un espace de réception (4, 13) pour tissu, l'espace de réception (4, 13) comprenant une pluralité d'évidements d'accès de fluide (6, 12) sous la forme d'un réseau, à travers lequel des fluides de l'extérieur du récipient (1, 10) peuvent entrer en contact avec le tissu à l'intérieur de l'espace de réception (4, 13) et quitter l'espace de réception (4, 13), et
- au moins une surface d'information (7, 14) pour disposer des données (8, 15),
**caractérisé en ce que**
au moins la surface d'information (7, 14) est fabriquée à partir d'un matériau configuré pour être coloré par rayonnement électromagnétique, dans lequel le matériau configuré pour être coloré par rayonnement électromagnétique est formé sensiblement à partir d'un matériau plastique, dans lequel le matériau plastique comprend un pigment absorbant les rayonnements, et dans lequel la surface d'information (7, 14) est dotée de données (8, 15) disposées par coloration sélective du matériau plastique par rayonnement électromagnétique.

2. Récipient (1, 10) selon la revendication 1, **caractérisé en ce que** l'ensemble du récipient (1, 10) est formé sensiblement à partir du matériau plastique.

3. Récipient (1, 10) selon la revendication 1 ou 2, dans lequel le matériau plastique comprend au moins un des plastiques suivants : copolymère d'acétal, acrylonitrile butadiène styrène, nylon, polyacétal, polycarbonate, polyester, polypropylène, polyuréthane, polystyrène, polysulfure de phénylène, polytéréphtalate d'éthylène, polytéréphtalate de butylène et polyoxyméthylène.

4. Récipient (1, 10) selon la revendication 1, 2 ou 3, dans lequel le matériau plastique comprend sensiblement du polyacétal.

5. Récipient (1, 10) selon la revendication 1, dans lequel le pigment absorbant les rayonnements comprend au moins un des composants suivants : mica, pigment nacré, kaolin, métal d'aluminium, silicate d'aluminium, trioxyde d'antimoine, oxyde de fer, oxyde d'étain, oxyde de titane et hydroxyde d'aluminium.

6. Récipient (1, 10) selon l'une quelconque des revendications précédentes, dans lequel la surface d'information (7, 14) peut être couplée de manière amovible au récipient (1, 10).

7. Récipient (1, 10) selon l'une quelconque des revendications précédentes, dans lequel le récipient (1, 10) est doté d'une référence (9, 16).

8. Procédé pour disposer des données (8, 15) sur un récipient (1, 10) pour tissu selon l'une quelconque des revendications 1 à 7, comprenant les étapes de traitement suivantes de :
- positionnement d'une surface d'information (7, 14) du récipient (1, 10) et une source de rayonnement électromagnétique l'une par rapport à l'autre, et
- disposition de données (8, 15) sur la surface d'information (7, 14) par coloration sélective d'au moins une partie de la surface d'information (7, 14) au moyen du rayonnement électromagnétique.

9. Procédé selon la revendication 8, dans lequel un laser est utilisé en tant que source de rayonnement électromagnétique.

10. Procédé selon l'une ou l'autre des revendications 8 ou 9, dans lequel les données (8, 15) sont disposées à l'aide d'un dispositif comprenant
- un moyen de marquage pour la disposition de données (8, 15) sur une surface d'information (7, 14) du récipient (1, 10), et
- un moyen de positionnement pour le positionnement relatif de la surface d'information (7, 14) et du moyen de marquage,
dans lequel les moyens de marquage comprennent une source de rayonnement électromagnétique.
